# EUROPÄISCHE PATENTSCHRIFT

(11) **EP 3 912 759 B1**
(45) Veröffentlichungstag und Bekanntmachung des Hinweises auf die Patenterteilung: **09.08.2023**
(21) Anmeldenummer: 20175252.4
(22) Anmeldetag: 18.05.2020
(51) Int. Cl.: B24B 39/02, B23P 9/02, B24B 39/04, B24B 5/42, C21D 7/06, C21D 7/08

(54) **VERFAHREN ZUR ERHÖHUNG EINER DAUERFESTIGKEIT EINER EISENBAHN-RADSATZWELLE**
METHOD FOR INCREASING THE FATIGUE STRENGTH OF A WHEELSET AXLE
PROCÉDÉ D'AUGMENTATION DE LA RÉSISTANCE EN FATIGUE D'UN ESSIEU

(43) Veröffentlichungstag der Anmeldung: 24.11.2021
(73) Patentinhaber: Hug, Dr. Joachim, 38678 Clausthal-Zellerfeld (DE)
(72) Erfinder: Hug, Dr. Joachim, 38678 Clausthal-Zellerfeld (DE)
(74) Vertreter: REHBERG HÜPPE + PARTNER

(56) Entgegenhaltungen:
- EP-A1- 1 201 364
- EP-A1- 3 778 967
- EP-B1- 1 201 364
- WO-A1-2019/194274
- WO-A1-2019/203992
- DE-A1- 19 740 290
- DE-B4- 19 740 290
- DE-U1-202010 002 843
- RU-C2- 2 553 124

## Beschreibung

### TECHNISCHES GEBIET DER ERFINDUNG

Die vorliegende Erfindung betrifft ein Verfahren zur Erhöhung einer Dauerfestigkeit einer Eisenbahn-Radsatzwelle. Hierbei kann die Welle eine beliebige Geometrie und einen beliebigen Vollquerschnitt aufweisen und einen beliebigen Querschnitt oder Querschnittsverlauf und Längsschnitt, beispielsweise mit axialen Teilabschnitten unterschiedlicher Durchmesser, aufweisen. Möglich ist auch, dass die Welle eine geradlinige Längsachse oder eine gekrümmte (bspw. mäanderförmig) verlaufende Längsachse aufweist und/oder ein Querschnitt der Welle zumindest in einem axialen Teilabschnitt rotationssymmetrisch oder nicht rotationssymmetrisch ist.

In dem Verfahren erfolgt eine Erhöhung einer Dauerfestigkeit der Eisenbahn-Radsatzwelle durch Einsatz eines Festwalzverfahrens. Bei einem Festwalzverfahren handelt es sich um ein in einer Randzone des Bauteils eingesetztes umformendes Verfahren zur positiven Beeinflussung der Eigenschaften in der Randzone des Bauteils. Hierbei erfolgt durch das Festwalzen zur Steigerung der Dauerfestigkeit eine Glättung einer Oberfläche des Bauteils, eine Induzierung von Druckeigenspannungen und eine Kaltverfestigung einer Randschicht. Hierdurch kann beispielsweise eine Erhöhung der Schwingfestigkeit und/oder eine Erhöhung der Lebensdauer des Bauteils herbeigeführt werden. In einem Festwalzverfahren wird ein Festwalzkörper, insbesondere eine Walze oder eine Kugel, gegen die Randzone des Bauteils gepresst. Die erzeugte Flächenpressung führt zu einer Plastifizierung und Umformung der Randzone und zur Erzeugung der Druckeigenspannungen und Kaltverfestigung.

### STAND DER TECHNIK

DE 197 40 290 A1 beschreibt ein Verfahren zur Erhöhung der Dauerfestigkeit einer im Betrieb einer Umlaufbiegung ausgesetzten Kurbelwelle einer Brennkraftmaschine im Bereich einer lokal hochbeanspruchten Stelle, im Bereich welcher es zu einem Versagen der Kurbelwelle im Betrieb in der Brennkraftmaschine kommen kann. In dem Verfahren wird die Kurbelwelle an den Wellenenden mit Zugkräften beaufschlagt, die in der Kurbelwelle zu einer Zugspannung führen und infolge des meanderförmigen Verlaufs der Kurbelwelle auch zu einer Biegespannung führen. In derart vorgespanntem Zustand der Kurbelwelle wird dann das Festwalzverfahren lokal an der hochbeanspruchten Stelle durchgeführt. Infolge der Vorspannung kann auch bei reduzierten Anpresskräften des Festwalzkörpers eine hohe Spannung in der Randzone herbeigeführt werden, wodurch der Verschleiß des Festwalzkörpers reduziert werden soll.

EP 1 930 450 A2 offenbart ein Verfahren zum Härten einer Oberfläche eines Bauteils mit der Erzeugung von Druckeigenspannungen. Beschrieben wird die Erzeugung der Druckeigenspannungen mittels Kugelstrahlen. Variable Betriebsparameter des Kugelstrahlens sind der Abstand einer Kugelstrahldüse, der Winkel einer Kugelstrahldüse gegenüber einer Oberfläche des Bauteils, der Strahldruck des Kugelstrahls, die Größe und das Material der eingesetzten Kugeln sowie die Form einer Düsenöffnung der Kugelstrahldüse sind. Das Verfahren kann sowohl Einsatz finden zur Wiederaufarbeitung eines Bauteils als auch für die Härtung einer Oberfläche eines neu hergestellten Bauteils. In dem Verfahren wird zunächst die Kontur einer Oberfläche des Bauteils mittels eines Lasers abgetastet. In der erfassten Kontur der Oberfläche werden dann konkave und konvexe Bereiche unterschieden. Vorgeschlagen wird, dass konkav gekrümmte Bereiche der Oberfläche mit einem hohen Strahldruck beaufschlagt werden als konvex gekrümmte Bereiche der Oberfläche. Eine Auswahl der Betriebsparameter des Kugelstrahlens kann auf Grundlage der jeweiligen Anforderungen an die Höhe der zu erzeugenden Druckeigenspannungen und an die erforderliche Glättung erfolgen. Möglich ist der Einsatz mehrerer Kugelstrahldüsen, die einzeln oder gepaart zeitlich nacheinander oder gleichzeitig betrieben werden können. Hierbei können unterschiedliche Kugelstrahldüsen auch mit verschiedenen Betriebsparametern betrieben werden. In EP 1 930 450 A2 ist erwähnt, dass die Oberflächenbehandlung und die Erzeugung der Druckeigenspannungen anstelle mittels des Einsatzes eines Kugelstrahlens auch durch ein Rollieren erfolgen kann, wobei ein mechanischer Impuls der Kugeln des Kugelstrahlverfahrens dann einem Anpressdruck eines Rollierers entsprechen soll.

DE 20 2010 002 843 U1 beschreibt die Problematik, dass an Eisenbahnradsatz-Wellen von Hochgeschwindigkeitszügen Schäden infolge einer Rissentwicklung aufgetreten sind. Dies hat den Aufwand der Fertigung der Eisenbahnradsatz-Wellen erhöht, da durch Einbringen von Druckeigenspannungen in die Oberfläche der Eisenbahnradsatz-Wellen das Entstehen der Risse vermieden werden sollte und bereits auftretende Risse zum Stillstand gebracht werden sollten. Vor diesem Hintergrund schlägt DE 20 2010 002 843 U1 vor, die Eisenbahnradsatz-Welle mit mehreren Paaren von Festwalzkörpern zu bearbeiten. Hierbei wirken die Paare der Festwalzkörper jeweils auf einen axialen Teilabschnitt der Eisenbahnradsatz-Welle ein, während die Eisenbahnradsatz-Welle verdreht wird. Die Paare der Festwalzkörper sind auf einem gemeinsamen Schlitten angeordnet, der in eine Vorschubrichtung bewegt werden kann. Die Festwalzkörper eines Paares wirken dabei in Umfangsrichtung versetzt auf die Eisenbahnradsatz-Welle ein.

DE 10 2017 102 447 B4 beschreibt die Behandlung einer stabförmigen Drehstabfeder durch ein Kugelstrahlen oder Festwalzen im Bereich der Randzone bei gleichzeitiger Beaufschlagung der Drehstabfeder mit einer Torsion, deren Richtungssinn der Beaufschlagung der Drehstabfeder bei der bestimmungsgemäßen Verwendung entsprechen soll. Auch hier können mehrere Festwalzkörper eingesetzt werden.

EP 1 201 364 A1 betrifft eine Vorrichtung zum Festwalzen von Radien oder Einstichen in einem Pleuellagerbereich einer Kurbelwelle. Vorgeschlagen wird, dass während des Festwalzens eine zusätzliche äußere Belastung auf die Kurbelwelle aufgebracht wird. Bei der äußeren Belastung kann es sich um eine in axialer Richtung an den Enden der Kurbelwelle aufgebrachte Zugkraft handeln, die infolge der radial versetzten Anordnung der Pleuellagerbereiche der Kurbelwelle zu einem Biegemoment in den Pleuellagerbereichen führt. Infolge der durch die Biegung induzierten Zugspannungen sollen kleinere Festwalzkräfte zur plastischen Verformung der Pleuellagerbereiche ausreichend sein oder unverändert große Festwalzkräfte zu einer größeren plastischen Verformung führen. Die Zugkraft soll dabei für eine nicht näher spezifizierte vorbestimmte Kurbelwelle 10.000 Newton betragen, womit in der Kurbelwelle eine Zugspannung erzeugt werden soll, die ¼ der Bruchspannung der Kurbelwelle beträgt. Alternativ wird vorgeschlagen, dass als äußere Belastung eine Querkraft in die Kurbelwelle eingeleitet wird, die der Betriebslast der Kurbelwelle im Motor entsprechen soll. Ein Festwalzen erfolgt dann in Kurbellagerbereichen abseits des Axialabschnitts, in welchen die Querkraft eingeleitet wird. Hierbei werden die Kurbellagerbereiche auf der den Festwalzrollen abgewandten Seite über zusätzlich mit einer Kraft beaufschlagte Stützrollen abgestützt. Über eine sequentielle Drehung der Kurbelwelle wird die Querkraft so variiert, dass das erzeugte Biegemoment an der Stelle, an welcher das Festwalzen erfolgt, den gewünschten Betrag und das richtige Vorzeichen hat. Möglich ist des Weiteren, dass entsprechend den Beanspruchungen der Kurbelwelle durch die jeweiligen Pleuelstangen im Betrieb des Motors mehrere Querkräfte in die zugeordneten Kurbellagerbereiche eingeleitet werden, um den Betriebszustand der Kurbelwelle in dem Motor zu simulieren. Hierzu entspricht die Resultierende der in die Kurbelwelle eingeleiteten Querkräfte der Resultierenden der auf der gegenüberliegenden Seite für das Festwalzen aufgebrachten Anpresskräfte. Um eine Simulation der Kräfte für unterschiedliche Drehwinkel der Kurbelwelle zu ermöglichen, erfolgt das Festwalzen sukzessive in unterschiedlichen, um 180° gegeneinander verdrehten Drehstellungen. Für das Festwalzen eines Kurbellagerbereiches wird eine Festwalzrolle des Festwalzwerkzeuges gegen die Mantelfläche des Kurbellagerbereiches gepresst. Benachbart der Festwalzrolle wirken Aufweitrollen in axialer Richtung auf Wangen der Kurbelwellen ein, womit ein Aufweiten der Wangen erfolgen soll. Auf die Festwalzrolle soll dann eine Kraft in Höhe von 40.000 Newton wirken, während eine aufweitende Kraft auf die Wangen in Höhe von 6.200 Newton wirken soll.

RU 2 553 124 C2 schlägt vor, ein elastisches Maschinenteil, welches eine relativ kleine Dicke aufweist, in gebogenem Zustand statisch einzuspannen und im Bereich der infolge der Biegung konvexen Oberfläche mit einer der Biegung überlagerten stoßartigen Last oder einer mittels Rollen aufgebrachten statischen Last zu beaufschlagen, um eine Härtung der Oberfläche herbeizuführen. Beschrieben wird hier, dass derart erzeugte Eigenspannungen in der Oberfläche nach der Entlastung durch Beseitigung der Einspannung intensiver werden und in größere Materialtiefen übertragen werden können.

### AUFGABE DER ERFINDUNG

Der Erfindung liegt die Aufgabe zugrunde, ein Verfahren vorzuschlagen, mit dem eine Dauerfestigkeit einer Welle auf alternative Weise und/oder noch weiter erhöht werden kann.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird ein Verfahren zur Erhöhung einer Dauerfestigkeit einer Eisenbahn-Radsatzwelle vorgeschlagen, bei dem zunächst eine Rotationsbewegung der Welle mit einer Drehzahl n erzeugt wird. Hierbei kann die Drehzahl n konstant sein oder variabel sein, beispielsweise gemäß einem a-priori vorgegebenen Drehzahlverlauf oder in Abhängigkeit von Betriebsparametern des Verfahrens. Möglich ist hierbei auch, dass der variable Drehzahlverlauf eine Drehrichtungsumkehr beinhaltet.

In dem erfindungsgemäß Verfahren erfolgt die Beanspruchung der Welle mit einer Biegung um eine quer zur Längsachse der Welle orientierte Biegeachse. Infolge der erzeugten Rotationsbewegung der Welle läuft die Biegung relativ zu der Welle mit der Drehzahl n um, was auch als "Umlaufbiegung" bezeichnet wird. Anders gesagt ist ein Materialbereich der Welle mit der sich aus der Drehzahl n ergebenden Frequenz mit einer maximalen Biege-Zugspannung und einer maximalen Biege-Druckspannung beaufschlagt, wobei die wirkende Biegespannung in einem Materialbereich der Welle mit der Rotation dieses Materialbereichs zwischen der maximalen Biege-Zugspannung und der maximalen Biege-Druckspannung mit dieser Frequenz oszilliert. Die in dem Verfahren erzeugte und auf die Welle ausgeübte Biegung kann dabei konstant sein oder mit der Zeit variabel sein. Die Biegung wird dabei über geeignete Aktuatoren (insbesondere mindestens einen hydraulischen Zylinder, der quer zu Längsachse der Welle auf die Welle einwirkt) erzeugt. Um lediglich einige nicht beschränkende Beispiele zu nennen, kann die Biegung in Form
- einer "Vierpunkt-Biegung" (Aufbringung der Biegung durch zwei parallele beabstandete Biegekräfte in den Endbereichen der Welle bei drehbarer Lagerung der Welle in zwei Drehlagern, die axial zwischen den Biegekräften angeordnet sind, oder durch eine drehbare Lagerung in den axialen Endbereichen mit Einwirken der Biegekräfte zwischen den Drehlagern; von den Endbereichen linear ansteigende Biegespannungen mit zwischen den Drehlagern bzw. Biegekräften konstanter Biegespannung) oder
- einer "Dreipunkt-Biegung" (drehbare Lagerung der Welle in den Endbereichen und Einwirken einer Biegekraft zwischen den Drehlagern auf die Welle; linear von den Drehlagern zum Ort des Einwirkens der Biegekraft auf die Welle ansteigender Biegespannung) erzeugt werden.

In dem erfindungsgemäß Verfahren wird ein Festwalzverfahren an der Welle durchgeführt. Durchaus möglich ist, dass hierbei ein Festwalzkörper auch in Umfangsrichtung der Welle bewegt wird, wobei infolge der erzeugten Rotationsbewegung der Welle auch in einem festen Umfangsbereich der Festwalzkörper auf die Welle einwirken kann, so dass eine Bewegung des Festwalzkörpers in Umfangsrichtung nicht erforderlich ist. Möglich ist des Weiteren, dass bei dem Festwalzverfahren eine schrittweise, diskontinuierliche oder kontinuierliche Bewegung des Festwalzkörpers in axialer Richtung mit einem axialen Vorschub erfolgt.

In dem erfindungsgemäß Verfahren erfolgt die Erzeugung der Rotationsbewegung der Welle, das Beanspruchen der Welle auf Biegung und das Durchführen des Festwalzverfahrens gleichzeitig. Dies hat zur Folge, dass in der Welle Spannungen induziert werden, die sich aus einer lokalen Überlagerung einerseits einer Biegespannung infolge der Biegung und andererseits infolge des Festwalzverfahren ergeben. Diese sich aus der Überlagerung ergebenden Spannungen führen dann zur plastischen Verformung der Randzone, zu der Erzeugung der Eigenspannungen und zu der Erzeugung der Kaltverfestigung. Ein Materialbereich der Welle (abseits der hinsichtlich der Biegung neutralen Faser) ist in dem erfindungsgemäß Verfahren damit zwei sich zeitlich entsprechend der Drehzahl n der Welle ändernden Spannungen ausgesetzt, die miteinander überlagert werden:
- Mit dem Umlauf der Welle oszilliert die Biegespannung zwischen einer maximalen Biege-Druckspannung und einer maximalen Biege-Zugspannung.
- Des Weiteren führt die Drehung der Welle dazu, dass in einem kleinen Umfangswinkelbereich oder lediglich für einen lokalen Umfangswinkel in der Randzone der Festwalzkörper eine zusätzliche Spannung erzeugt. Befindet sich hingegen dieser Materialbereich nicht in dem Umfangswinkelbereich oder an dem lokalen Umfangswinkel, an dem der Festwalzkörper mit diesem Materialbereich in Wechselwirkung tritt, induziert der Festwalzkörper auch keine Spannung in dem Materialbereich.

Der Materialbereich ist somit der insbesondere sinusförmig oszillierenden Biegespannung und der immer wieder nur kurzfristig ausgeübten Spannung infolge des Festwalzverfahrens ausgesetzt. Die sich aus dieser Überlagerung ergebende Spannung kann dabei durchaus für einen Umlauf der Welle das Vorzeichen wechseln.

In dem erfindungsgemäß Verfahren werden (mindestens) zwei Festwalzkörper gegen die Welle gepresst. Dies kann zeitgleich erfolgen oder zeitlich getrennt. Möglich ist dabei, dass die zwei Festwalzkörper axial versetzt und/oder in Umfangsrichtung der Welle versetzt auf Randzonen der Welle einwirken. Möglich ist sogar, dass die Festwalzkörper so (axial oder in Umfangsrichtung) eng benachbart auf die Welle einwirken, dass es zu einer Überlagerung eines Teilbereichs der induzierten Festwalzspannungen der beiden Festwalzkörper in dem Material der Welle kommen kann.

Erfindungsgemäß weisen die Festwalzkörper unterschiedliche Geometrien und/oder unterschiedliche Durchmesser auf. Handelt es sich beispielsweise bei dem Festwalzkörper um Walzen, können diese unterschiedliche Längen aufweisen. Sind die Walzen nicht zylindrisch ausgebildet, sondern verfügen diese im Halblängsschnitt über eine konvex oder konkav ausgebildete Außenkontur, kann auch der konvexe oder konkave Verlauf der Konturen der Walzen voneinander abweichen. Des Weiteren möglich ist, dass die Festwalzkörper bei Ausbildung als Walzen oder Kugeln unterschiedliche Durchmesser aufweisen. Hierdurch ergeben sich für die unterschiedlichen Festwalzkörper unterschiedliche Kontaktbedingungen sowie Festwalzspannungsverläufe über die Kontaktflächen, die im einfachsten Fall als Hertz'sche Flächenpressungen angesehen werden können, die auch von der Größe der Durchmesser abhängig sind. Im Rahmen der Erfindung können die Festwalzkörper auch unterschiedliche Materialien oder Materialeigenschaften aufweisen.

Grundsätzlich kann das Festwalzverfahren bei beliebiger Orientierung gegenüber der Orientierung der Erzeugung der Biegung der Welle durchgeführt werden. Vorzugsweise wird das Festwalzverfahren aber in einem Umfangsbereich der Welle durchgeführt, in dem ein Betrag der Biegespannung infolge der Biegung maximal ist (lokales oder absolutes Maximum). Dies hat zur Folge, dass unter Umständen eine besonders starke Bearbeitung der Randzone erfolgt, da die Überlagerung der Festwalzspannung mit einer Biegespannung mit einem maximalen Betrag erfolgt. Unter Umständen können auf diese Weise auch verhältnismäßig kleine Anpresskräfte für das Anpressen des Festwalzkörpers an die Welle verwendet werden, mit denen dennoch eine plastische Verformung der Randzone erfolgen kann. Beispielsweise kann in diesem Fall das Festwalzverfahren besonders materialschonend ausgeführt sein und/oder ein Verschleiß des Festwalzkörpers reduziert werden. Für diese Ausgestaltung kann der Festwalzkörper in dem Umfangsbereich der Welle auf die Welle einwirken, der in der Beanspruchungsebene liegt, die durch die Vektoren der auf die Welle einwirkenden Biegekräfte aufgespannt wird.

Im Rahmen der Erfindung ist durchaus möglich, dass das Festwalzverfahren in dem Umfangsbereich der Welle durchgeführt wird, indem die Biegespannung gerade die maximale Biege-Zugspannung ist. Für einen besonderen Vorschlag der Erfindung wird allerdings das Festwalzverfahren in dem Umfangsbereich der Welle durchgeführt, in dem die Biegespannung die maximale Biege-Druckspannung ist. Versuche haben gezeigt, dass hierdurch für die Beanspruchung der Welle im Betrieb eine besonders hohe Dauerfestigkeit herbeigeführt werden kann. Ohne dass eine Einschränkung der Erfindung auf die folgende vermutete Begründung für diese signifikante Erhöhung der Dauerfestigkeit der Welle erfolgen soll, kann der Grund für die vorteilhafte Wirkung der Überlagerung der Festwalzspannung mit der maximalen Biege-Druckspannung u. U. darin gesehen werden, dass ein Versagen der Welle mit der Entstehung und dem Fortschritt eines Risses vorrangig im Betrieb der Welle im Bereich der maximalen Biege-Zugspannung erfolgt, so dass Maßnahmen getroffen werden müssen, um die Rissentstehung und den Rissfortschritt infolge der maximalen Biege-Zugspannung zu verhindern. Möglicherweise werden bei Überlagerung der Festwalzspannung mit der maximalen Biege-Druckspannung in dem erfindungsgemäßen Verfahren in der Randzone Druck-Eigenspannungen eingefroren, die im Betrieb der Welle dann zunächst infolge wirkender Biege-Zugspannungen überwunden werden müssen, bis tatsächlich in der Randzone eine sich aus der Druck-Eigenspannung und der wirkenden Biegespannung ergebende überlagerte Zugspannung entsteht. Eine kritische Biege-Zugspannung wird damit in dem Materialbereich im Betrieb der Welle erst bei einer höheren wirkenden Biegung erzeugt.

Möglich ist, dass die Festwalzkörper mit unterschiedlichen Anpresskräften gegen die Welle gepresst werden, wobei die Maxima oder Beträge der Anpresskräfte unterschiedlich sein können oder auch die Anpresskraftverläufe unterschiedlich sein können. Alternativ oder kumulativ möglich ist, dass die Festwalzkörper für unterschiedliche Zeitdauern an die Welle gepresst werden und somit auf die Randzone(n) der Welle einwirken. Untersuchungen der Anmelderin haben auf das Ergebnis geführt, dass durch entsprechende Variation des Festwalzverfahrens für die unterschiedlichen Festwalzkörper eine weitere Erhöhung der Dauerfestigkeit erzielt werden kann, deren Grund vermutlich darin besteht, dass beispielsweise bei Einsatz von Festwalzkörper mit unterschiedlichen Durchmessern und/oder unterschiedlichen Anpresskräften und/oder Festwalzspannungsverläufen eine bessere Tiefenwirkung der erzeugten Eigenspannungen und Kaltverfestigung herbeigeführt werden kann.

Möglich ist, dass das Festwalzverfahren (an einer Außenfläche der Welle) über die gesamte Längserstreckung der Welle durchgeführt wird. Vorzugsweise wird das Festwalzverfahren ausschließlich in einem axialen Teilabschnitt der Welle durchgeführt, wobei es sich dann um den hochbeanspruchten Teilabschnitt der Welle handeln kann. Möglich ist im Rahmen der Erfindung auch, dass das Festwalzverfahren in unterschiedlichen axialen Teilabschnitten der Welle durchgeführt wird, wobei dann in den unterschiedlichen axialen Teilabschnitten auch unterschiedliche Betriebsparameter des Festwalzverfahrens, beispielsweise unterschiedliche Geometrien oder Durchmesser mindestens eines Festwalzkörpers, unterschiedliche Materialien des Festwalzkörpers, unterschiedliche Anpresskräfte oder unterschiedliche Zeitdauern zum Einsatz kommen können.

Die Erfindung schlägt für eine weitere Ausführungsform vor, dass die Welle (zumindest in dem mit dem Festwalzverfahren behandelten Bereich) zusätzlich einer weiteren Beanspruchung ausgesetzt ist. Dies kann zeitgleich oder zeitlich versetzt zu dem Festwalzverfahren und der Beaufschlagung mit der Biegung erfolgen. Beispielsweise ist möglich, dass die Welle zusätzlich auf Torsion, Zug oder Druck beansprucht wird.

Ein weiterer Vorschlag der Erfindung widmet sich der Dimensionierung der Biegespannung der Welle. Die Dimensionierung der Biegespannung in der Welle unterliegt dabei unter Umständen einem Zielkonflikt: Einerseits soll die Biegespannung in der Welle während der Durchführung des Verfahrens nicht dazu führen, dass in Folge der dynamischen Beanspruchung mit der umlaufenden Biegung die Welle (in dem Materialbereich, in dem das Festrollverfahren durchgeführt wird oder in einem anderen Materialbereich) so geschwächt wird, dass die Dauerfestigkeit der Welle gemindert ist. Andererseits soll die maximale Biegespannung in der Welle aber so groß dimensioniert werden, dass in Folge der Überlagerung mit der Festwalzspannung die angestrebte Kaltverfestigung und Induzierung von Druckeigenspannungen erfolgt. Für einen erfindungsgemäßen Vorschlag wird zur Dimensionierung der maximalen Biegespannung in der Welle die Dehngrenze des Materials der Welle herangezogen, die auch als Elastizitätsgrenze bezeichnet wird und mit R_{p0,2} für das jeweilige Material bekannt ist oder auch auf einfache Weise als Materialkenngröße für den für die Welle eingesetzten Werkstoff ermittelt werden kann. Für einen Vorschlag der Erfindung erfolgt die Dimensionierung der maximalen Biegespannung der Welle im Bereich von 70 % bis 100 % der Dehngrenze des Materials der Welle, wobei die maximale Biegespannung beispielsweise im Bereich von 80 % bis 99 % der Dehngrenze, im Bereich von 85 % bis 98 % oder im Bereich von 90 % bis 97 % der Dehngrenze liegen kann.

Ein weiterer Aspekt der Erfindung widmet sich der Dimensionierung der Flächenpressung, die in dem Festwalzverfahren von dem Festwalzkörper auf die Mantelfläche der Welle ausgeübt wird. Im Rahmen der Erfindung durchgeführte Versuche haben dabei auf das Ergebnis geführt, dass diese Flächenpressung mindestens 5 GPa betragen kann, wobei die Flächenpressung insbesondere im Bereich von 5 GPa bis 20 GPa (vorzugsweise im Bereich von 6 GPa bis 15 GPa oder im Bereich von 7 GPa bis 12 GPa) liegen kann. Für die Wahl einer derartigen Flächenpressung konnte eine besonders gute Erhöhung der Dauerfestigkeit der Welle herbeigeführt werden, ohne das eine Erzeugung einer zu hohen Flächenpressung zu einer Beschädigung, beispielsweise in Form von Rissen der Mantelfläche, erfolgt.

Für einen weiteren (alternativen oder kumulativen) Vorschlag der Erfindung erfolgt eine Bemessung der Flächenpressung, die von dem Festwalzkörper auf die Mantelfläche der Welle ausgeübt wird, in Abhängigkeit von der Dehngrenze des Materials der Welle. Diesbezüglich schlägt die Erfindung vor, dass die ausgeübte Flächenpressung 5.0 - mal bis 15.0 - mal (vorzugsweise 8.0 - mal bis 10.0 - mal) größer ist als die Dehngrenze des Materials der Welle.

Sofern hier eine Flächenpressung genannt ist, die von dem Festwalzkörper auf die Mantelfläche der Welle ausgeübt wird, kann es sich um eine über die Kontaktfläche gemittelte Flächenpressung handeln. Vorzugsweise ist die angegebene Flächenpressung aber die maximale in der Kontaktfläche erzeugte Flächenpressung. Diese kann für einen idealisierten Hertz'schen Kontakt analytisch aus der idealisierten Kontur des Festwalzkörpers ermittelt werden, sodass analytisch die erforderliche Anpresskraft des Festwalzkörpers an die Mantelfläche der Welle ermittelt werden kann. Für abweichende Konturen des Festwalzkörpers kann entsprechend eine Bestimmung der Anpresskraft aus der gewünschten Flächenpressung erfolgen.

Weitere Untersuchungen haben gezeigt, dass unter Umständen der Wahl des Durchmessers des Festwalzkörpers eine große Bedeutung zukommt. Gemäß einem Vorschlag der Erfindung wird in dem Festwalzverfahren ein Festwalzkörper (insbesondere in Ausgestaltung als Kugel oder Walze) mit einem Durchmesser d verwendet. Ein Verhältnis V beschreibt das Verhältnis des Durchmessers D der Welle in dem Kontaktbereich der Welle mit dem Festwalzkörper zu dem Durchmesser d des Festwalzkörpers, sodass V = D/d gilt. Erfindungsgemäß liegt das Verhältnis V im Bereich von 3.0 bis 50.0, wobei das Verhältnis insbesondere im Bereich von 5.0 bis 40.0 oder 8.0 bis 30.0 liegt.

Für eine besondere, die Erfindung nicht beschränkende Ausgestaltung erfolgt in dem erfindungsgemäßen Verfahren eine Erhöhung der Dauerfestigkeit einer Welle, die in dem kritischen und zu behandelnden Bereich einen Durchmesser von 210 mm (+/- 20 % oder +/- 10 %) aufweist, wobei in diesem Fall ein Festwalzkörper mit einem Durchmesser im Bereich von 4 mm bis 10 mm, insbesondere 5 mm bis 7 mm und beispielsweise 6 mm verwendet wird.

Bei dem Verfahren kann eine Vorrichtung eingesetzt werden, die einen Antrieb aufweist, der die Welle zur Erzeugung einer Rotationsbewegung mit einer Drehzahl n antreiben kann. Des Weiteren verfügt die verwendete Vorrichtung über eine Beanspruchungseinrichtung zum Beanspruchen der Welle mit einer Biegung um eine quer zur Längsachse der Welle orientierte Biegeachse. In diesem Fall läuft die Biegung mit der Drehzahl n um. Die verwendete Vorrichtung verfügt auch über eine Festwalzeinrichtung zur Durchführung eines Festwalzverfahrens an der Welle. Schließlich weist die verwendete Vorrichtung auch eine Steuereinheit auf, die insbesondere
- den Antrieb zur Erzeugung der Drehzahl n,
- die Beanspruchungseinrichtung, insbesondere mindestens einen Aktuator zur Erzeugung einer Biegekraft, zum Beanspruchen der Welle mit der Biegung und
- die Festwalzeinrichtung zur Erzeugung eines Festwalzverfahrens ansteuert zur Durchführung eines Verfahrens, wie dieses zuvor erläutert worden ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Festwalzeinrichtung oder einem Festwalzkörper die Rede ist, ist dies so zu verstehen, dass genau eine Festwalzeinrichtung oder ein Festwalzkörper, zwei Festwalzeinrichtungen oder Festwalzkörper oder mehr Festwalzeinrichtungen oder Festwalzkörper vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisiert eine Vorrichtung zur Erhöhung einer Dauerfestigkeit einer Welle, mit der ein Verfahren zur Erhöhung einer Dauerfestigkeit der Welle durchführbar ist.
- **Fig. 2**: zeigt stark schematisiert die Vorrichtung gemäß Fig. 1 mit einer Steuereinrichtung zur Steuerung der Durchführung des erfindungsgemäß verwendeten Verfahrens.
- **Fig. 3**: zeigt den Verlauf der Biegespannung über die Längserstreckung der Welle.
- **Fig. 4**: zeigt die Spannung in einem Querschnitt der Welle, die sich aus der Überlagerung der Biegespannung und der Festwalzspannung ergibt.

### FIGURENBESCHREIBUNG

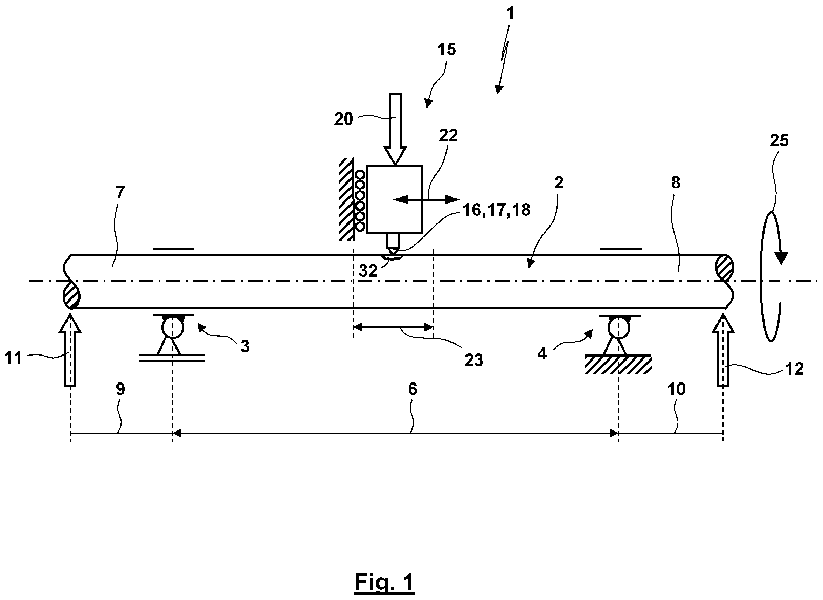

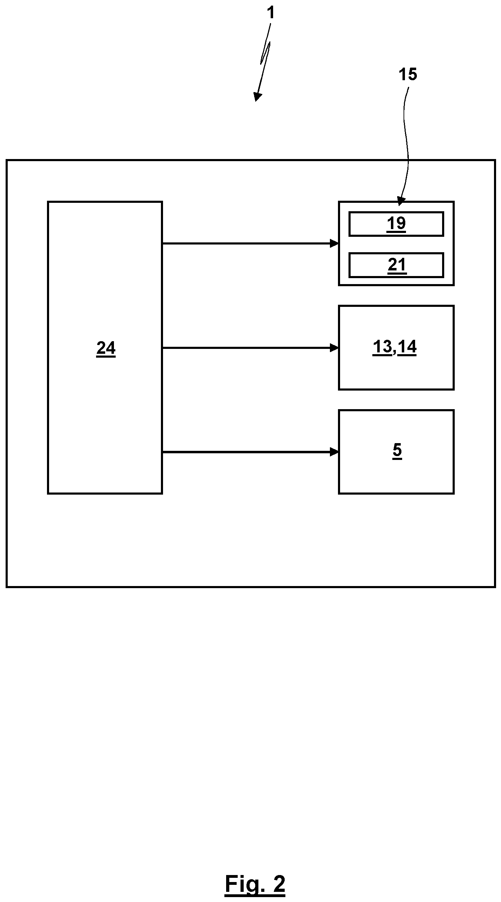

**Fig. 1** zeigt eine Vorrichtung 1, mittels welcher die Erhöhung einer Dauerfestigkeit einer Welle 2 erfolgen kann. Die Welle 2 ist über Drehlager 3, 4 drehbar gelagert und wird über einen Antrieb 5 (s. Fig. 2) mit einer Drehzahl n angetrieben. Die Drehzahl n kann dabei konstant oder veränderlich sein und einem fest vorgegebenen Drehzahlverlauf folgen oder einem sich aus Betriebsbedingungen ergebenden Drehzahlverlauf folgen, wobei in dem Drehzahlverlauf auch eine Drehrichtungsumkehr erfolgen kann.

Die Drehlager 3, 4 verfügen über einen Abstand 6. Über die Drehlager 3, 4 auskragende axiale Teilabschnitte 7, 8 werden in einem Abstand 9, 10 von den Drehlagern 3, 4 mit Biegekräften 11, 12 beaufschlagt. Hierbei können die Biegekräfte 11, 12 konstant sein oder entsprechend einem vorgegebenen oder sich aus den Betriebsbedingungen ergebenden Biegekraftverlauf verändert werden. Die Biegekräfte 11, 12 werden über Aktuatoren 13, 14 (s. Fig. 2) erzeugt, bei denen es sich beispielsweise um hydraulische Beaufschlagungszylinder handeln kann. Die Biegekräfte 11, 12 sind parallel zueinander orientiert und vorzugsweise gleich groß. Die Vektoren der Biegekräfte 11, 12 spannen eine Beaufschlagungsebene auf, die der Zeichenebene gemäß Fig. 1 entspricht.

Eine Mantelfläche der Welle 2 und eine Randzone 32 derselben wird von einer Festwalzeinrichtung 15 bearbeitet und beaufschlagt. Die Festwalzeinrichtung 15 weist einen Festwalzkörper 16 auf. Der Festwalzkörper 16 ist beispielsweise als Walze 17 (mit zylindrischer oder leicht konvexer oder konkaver Kontur) oder als Kugel 17 oder als prismatischer Körper oder beliebig geformter Körper ausgebildet. Der Festwalzkörper 16 ist drehbar in der Festwalzeinrichtung 15 gelagert, so dass dieser an der Mantelfläche der Welle 2 abwälzen kann. Ein Aktuator 19 der Festwalzeinrichtung 15 presst den Festwalzkörper 16 mit einer Anpresskraft 20 gegen die Mantelfläche der Welle 2. Die Festwalzeinrichtung 15 verfügt auch über eine Vorschubeinrichtung 21, mittels welcher der Festwalzkörper 16 in einer Vorschubbewegung 22 entlang der Mantelfläche der Welle 2 bewegt werden kann, so dass mit der Festwalzeinrichtung 15 zumindest ein axialer Teilabschnitt 23 der Welle 2 bearbeitet werden kann.

Eine Steuereinheit 24, die als elektronische Steuereinheit oder mit mehreren miteinander vernetzten elektronischen Steuereinheiten ausgebildet sein kann, steuert die Festwalzeinrichtung 15, hier einerseits den Aktuator 19 zur Erzeugung der Anpresskraft 20, und andererseits die Vorschubeinrichtung 21 zur Erzeugung der Vorschubbewegung 22, die Aktuatoren 13, 14 zur Erzeugung der Biegekräfte 11, 12 und/oder den Antrieb 5 zur Erzeugung der Rotation 25 der Welle 2 mit der Drehzahl n an. Hierbei umfasst die Steuerung auch die Möglichkeit des Einsatzes einer Regelung mit einer Rückführung eines Messwerts.

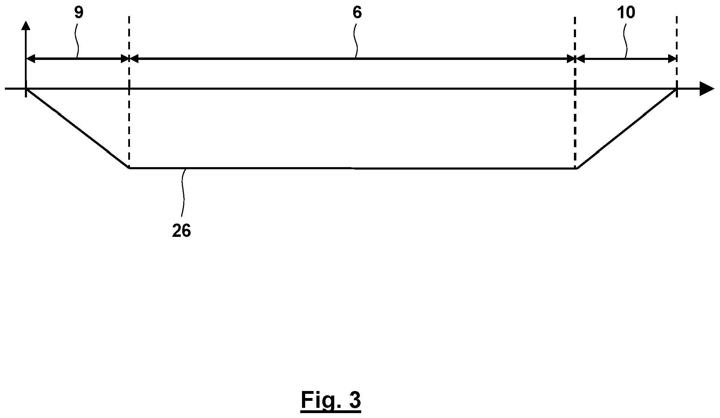

**Fig. 3** zeigt den Verlauf einer Biegespannung 26 als Funktion der Längserstreckung der Welle 2. Zu erkennen ist hier, dass der Betrag der Biegespannung 26 von dem Ort der Krafteinleitung der Biegekraft 11 bis zum dem Drehlager 3 linear zunimmt, während dieser zwischen den Drehlagern 3, 4 konstant ist und von dem Drehlager 4 bis zu dem Ort der Beaufschlagung der Welle 2 mit der Biegekraft 12 wieder linear abnimmt.

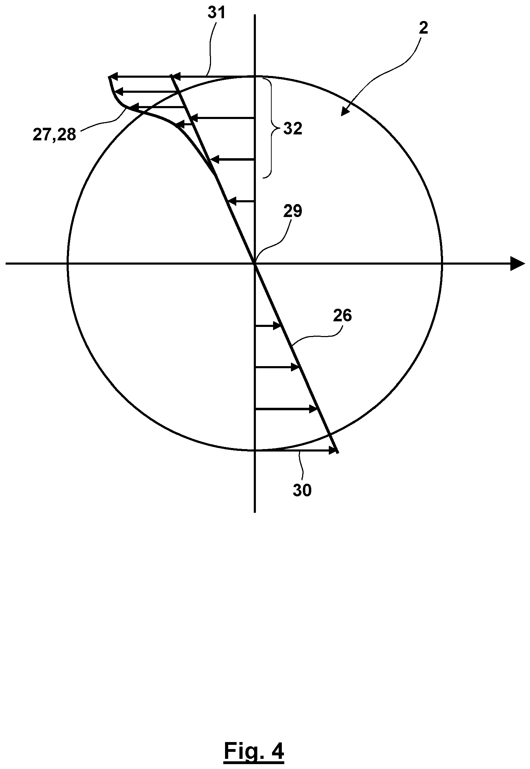

**Fig. 4** zeigt den Verlauf einer überlagerten Spannung 27, der sich aus der Überlagerung der Biegespannung 26 mit einer Festwalzspannung 28 ergibt. Hierbei wird die Festwalzspannung 28 durch das Anpressen des Festwalzkörpers 16 mit der Anpresskraft 20 an die Mantelfläche der Welle 2 erzeugt. Fig. 4 zeigt die Vorläufe der Biegespannung 26, der Festwalzspannung 28 und der überlagerten Spannung 27 in dem Querschnitt in einer Richtung, die in der Beanspruchungsebene liegt. Der Festwalzkörper 16 der Festwalzeinrichtung 15 wirkt dabei in der Beanspruchungsebene auf die Mantelfläche der Welle 2 ein.

Zu erkennen ist in Fig. 4, dass die Biegespannung 26 im Bereich einer neutralen Faser 29 Null beträgt. In Richtung der Außenfläche steigt der Betrag der Biegespannung 26 (hier linear) an, wobei bei Verwendung eines Kreis-Vollquerschnitts die neutrale Faser 29 im Mittelpunkt des Kreisquerschnitts liegt und der Betrag der maximalen Biege-Zugspannung 30 dem Betrag der maximalen Biege-Druckspannung 31 entspricht. Hierbei wirkt der Festwalzkörper 16 der Festwalzeinrichtung 15 im Bereich der maximalen Biege-Druckspannung 31 auf die Welle 2 ein. Der Betrag der maximalen Biege-Druckspannung 31 entspricht der in Fig. 3 dargestellten Biegespannung 26.

In Fig. 4 ist zu erkennen, dass sich infolge des Einwirkens des Festwalzkörpers 16 auf eine Randzone 32 (die hier u. U. übertrieben tief dargestellt ist) die Festwalzspannung 28. Die Festwalzspannung 28 ist im Bereich der Mantelfläche der Welle 2 maximal und nimmt dann mit zunehmender Eindringtiefe im Bereich der Randzone 32 ab.

(Zu beachten ist, dass es sich bei der Darstellung gemäß Fig. 4 um eine vereinfachte Darstellung handelt, die unter Umständen die technischen und physikalischen Gegebenheiten nicht korrekt abbildet. So ist möglich, dass die Biegespannung 26 und die Festwalzspannung 28 in der Welle in unterschiedliche Richtungen wirken und somit in Form eines mehrachsigen Spannungszustands zur Überlagerung kommen.)

Infolge der Biegekräfte 11, 12 wird die Welle 2 mit einer Biegung um eine Biegeachse beaufschlagt, die vertikal zu der Beanspruchungsebene und vertikal zur Zeichenebene gemäß Fig. 1 orientiert ist.

Gemäß Fig. 1 wird somit eine Umlaufbiegung mittels einer Vierpunkt-Biegeeinrichtung erzeugt.

### BEZUGSZEICHENLISTE

- 1: Vorrichtung
- 2: Welle
- 3: Drehlager
- 4: Drehlager
- 5: Antrieb
- 6: Abstand
- 7: Teilabschnitt
- 8: Teilabschnitte
- 9: Abstand
- 10: Abstand
- 11: Biegekraft
- 12: Biegekraft
- 13: Aktuator
- 14: Aktuator
- 15: Festwalzeinrichtung
- 16: Festwalzkörper
- 17: Walze
- 18: Kugel
- 19: Aktuator
- 20: Anpresskraft
- 21: Vorschubeinrichtung
- 22: Vorschubbewegung
- 23: Teilabschnitt
- 24: Steuereinheit
- 25: Rotation
- 26: Biegespannung
- 27: überlagerte Spannung
- 28: Festwalzspannung
- 29: neutrale Faser
- 30: maximale Biege-Zugspannung
- 31: maximale Biege-Druckspannung
- 32: Randzone

## Patentansprüche

1. Verfahren zur Erhöhung einer Dauerfestigkeit einer Eisenbahn-Radsatzwelle (2) mit den folgenden Verfahrensschritten:
aa) Erzeugen einer Rotationsbewegung der Welle (2) mit einer Drehzahl n,
ab) Beanspruchen der Welle (2) mit einer relativ zur Welle (2) mit der Drehzahl n umlaufenden Biegung um eine quer zur Längsachse der Welle (2) orientierten Biegeachse und
ac) Durchführen eines Randzonen-Verfestigungsverfahrens an der Welle (2),
ad) wobei das Erzeugen der Rotationsbewegung der Welle (2), das Beanspruchen der Welle (2) auf Biegung und das Durchführen des Randzonen-Verfestigungsverfahrens gleichzeitig erfolgt und in der Welle (2) Spannungen (27) in Form einer lokalen Überlagerung einer Biegespannung (26) infolge der Biegung und einer Spannung infolge des Randzonen-Verfestigungsverfahrens induziert werden,
ae) das Randzonen-Verfestigungsverfahren ein Festwalzverfahren ist und die infolge des Randzonen-Verfestigungsverfahrens induzierte Spannung eine Festwalzspannung (28) ist,
af) in dem Festwalzverfahren zwei Festwalzkörper (16) gegen die Welle (2) gepresst werden und
ag) die Festwalzkörper (16) unterschiedliche Geometrien aufweisen und/oder unterschiedliche Durchmesser aufweisen und/oder unterschiedliche Materialien oder Materialeigenschaften aufweisen .

2. Verfahren nach Anspruch 1, **dadurch gekennzeichnet, dass** das Randzonen-Verfestigungsverfahren in dem Umfangsbereich der Welle (2) durchgeführt wird, in dem ein Betrag der Biegespannung (26) infolge der Biegung maximal ist, oder das Randzonen-Verfestigungsverfahren in dem Umfangsbereich der Welle (2) durchgeführt wird, in dem die Biegespannung eine maximale Biege-Druckspannung (31) oder eine maximale Biege-Zugspannung (30) ist.

3. Verfahren nach Anspruch 1 oder 2, **dadurch gekennzeichnet, dass** die Festwalzkörper (16)
a) mit unterschiedlichen Anpresskräften (20) gegen die Welle (2) gepresst werden und/oder
b) für unterschiedliche Zeitdauern gegen die Welle (2) gepresst werden.

4. Verfahren nach einem der vorhergehenden Ansprüche, **dadurch gekennzeichnet, dass**
a) das Randzonen-Verfestigungsverfahren ausschließlich in einem axialen Teilabschnitt (23) der Welle (2) und/oder
b) das Randzonen-Verfestigungsverfahren mit unterschiedlichen Parametern in unterschiedlichen axialen Teilabschnitten der Welle (2)
durchgeführt wird.

5. Verfahren nach einem der vorhergehenden Ansprüche, **dadurch gekennzeichnet, dass** die Welle (2) zusätzlich mit einer weiteren Beanspruchung beansprucht wird.

6. Verfahren nach einem der vorhergehenden Ansprüche, **dadurch gekennzeichnet, dass** die Biegung der Welle (2) derart erfolgt, dass die maximale Biegespannung der Welle (2) im Bereich von 70% bis 100% der Dehngrenze des Materials der Welle (2) liegt.

7. Verfahren nach einem der vorhergehenden Ansprüche, **dadurch gekennzeichnet, dass** in dem Festwalzverfahren der Festwalzkörper (16) eine Flächenpressung auf die Mantelfläche der Welle (2) ausübt, die mindestens 5 GPa beträgt.

8. Verfahren nach einem der vorhergehenden Ansprüche, **dadurch gekennzeichnet, dass** die in dem Festwalzverfahren von dem Festwalzkörper (16) auf die Mantelfläche der Welle (2) ausübte Flächenpressung 5.0-mal bis 15.0-mal größer ist als Dehngrenze des Materials der Welle (2).

9. Verfahren nach einem der vorhergehenden Ansprüche, **dadurch gekennzeichnet, dass** in dem Festwalzverfahren ein Festwalzkörper (16) mit einem Durchmesser d verwendet wird, wobei das Verhältnis V eines Durchmessers D der Welle (2) in dem Kontaktbereich der Welle (2) mit dem Festwalzkörper (16) zu dem Durchmesser d des Festwalzkörpers (16) im Bereich von V = 3.0 bis V = 50.0 liegt.

10. Verfahren nach einem der vorhergehenden Ansprüche, **dadurch gekennzeichnet, dass** eine Vorrichtung (1) zur Erhöhung der Dauerfestigkeit einer Welle (2) mit
a) einem Antrieb (5) zur Erzeugung einer Rotationsbewegung der Welle (2) mit einer Drehzahl n,
b) einem Beanspruchungseinrichtung zum Beanspruchen der Welle (2) mit einer relativ zur Welle (2) mit der Drehzahl n umlaufenden Biegung um eine quer zur Längsachse der Welle (2) orientierten Biegeachse,
c) einer Festwalzeinrichtung (15) zur Durchführung eines Festwalzverfahrens an der Welle (2), und
d) einer Steuereinheit (24) mit Steuerlogik zur Durchführung der Verfahrensschritte verwendet wird.

## Claims

1. Method for increasing a fatigue stress of a wheelset shaft (2) for a railway, the method comprising the following method steps:
aa) generation of a rotational movement of the shaft (2) with a number of revolutions n,
ab) biasing the shaft (2) with a bending about a bending axis having an orientation transverse to the longitudinal axis of the shaft (2), the bending rotating relative to the shaft (2) with the number of revolutions n, and
ac) executing an outer zone strengthening method on the shaft (2),
ad) wherein the generation of the rotational movement of the shaft (2), the biasing of the shaft (2) with a bending and the execution of the outer zone strengthening method are performed simultaneously and in the shaft (2) strains (27) are induced, the strains being caused by a local superpositions of a bending strain (26) due to the bending and a strain due to the outer zone strengthening method,
ae) the outer zone strengthening method being a rolling method and the strain induced by the outer zone strengthening method being a rolling strain (28),
af) in the rolling method two rolling bodies (16) being pressed on the shaft (2) and
ag) the rolling bodies (16) comprising different geometries and/or different diameters and/or being made of different materials or having different material properties.

2. Method of claim 1, **characterized in that** the outer zone strengthening method is executed in a circumferential region of the shaft (2) wherein the absolute value of the bending strain (26) due to the bending has a maximum, or the outer zone strengthening method is executed in a circumferential region of the shaft (2) wherein the bending tension is a bending compressive stress maximum (31) or a bending tensile stress maximum (30).

3. Method of claim 1 or 2, **characterized in that** the rolling bodies (16)
a) are pressed with different pressing forces (20) on the shaft (2) and/or
b) are pressed with different time durations on the shaft (2).

4. Method of one of the preceding claims, **characterized in that**
a) the outer zone strengthening method is only executed in an actual subsection (23) of the shaft (2) and/or
b) the outer zone strengthening method is executed with different parameters in different actual subsections of the shaft (2).

5. Method of one of the preceding claims, **characterized in that** the shaft (2) is additionally biased with an additional bias.

6. Method of one of the preceding claims, **characterized in that** the bending of the shaft (2) is such that the bending stress maximum of the shaft (2) is in the region of 70 % to 100 % of the proof stress of the material of the shaft (2).

7. Method of one of the preceding claims, **characterized in that** in the rolling method the rolling body (16) applies a surface pressure on the outer surface of the shaft (2) which is at least 5 GPa.

8. Method of one of the preceding claims, **characterized in that** the surface pressure applied in the rolling method by the rolling body (16) on the outer surface is 5.0 times to 15.0 times higher than the proof stress of the material of the shaft (2).

9. Method of one of the preceding claims, **characterized in that** in the rolling method a rolling body (16) having a diameter d is used wherein the relation V of a diameter D of the shaft (2) in the contact region of the shaft (2) with the rolling body (16) and the diameter d of the rolling body (16) is in the region of V=3.0 to V=50.0.

10. Method of one of the preceding claims, **characterized in that** a device (1) for increasing the fatigue limit of a shaft (2) is used comprising
a) a drive (5) for generating a rotational movement of the shaft (2) with a number of revolutions n,
b) a biasing device for biasing the shaft (2) with a bending about a bending axis having an orientation transverse to the longitudinal axis of the shaft (2), the bending rotating relatively to the shaft (2) with the number of revolutions n,
c) a rolling device (15) for executing a rolling method on the shaft (2) and
d) a control unit (24) comprising control logic for executing the method steps.

## Revendications

1. Procédé pour augmenter la résistance à la fatigue d'un essieu de bogie ferroviaire (2) comprenant les étapes de procédé suivantes :
aa) génération d'un mouvement de rotation de l'essieu (2) à une vitesse de rotation n,
ab) sollicitation de l'essieu (2) avec une flexion tournant autour d'un axe de flexion orienté transversalement à l'axe longitudinal de l'essieu (2) par rapport à l'essieu (2) tournant à la vitesse de rotation n,
ac) exécution d'un procédé de renforcement de la zone de bord sur l'essieu (2),
ad) dans lequel la génération du mouvement de rotation de l'essieu (2), la sollicitation de l'essieu (2) en flexion et l'exécution du procédé de renforcement de la zone de bord sont effectuées simultanément, et des contraintes (27) sous forme d'une superposition locale d'une contrainte de flexion (26) due à la flexion et d'une contrainte induite par le procédé de renforcement de la zone de bord sont induites dans l'essieu (2),
ae) dans lequel le procédé de renforcement de la zone de bord est un procédé de galetage à froid et la contrainte induite par le procédé de renforcement de la zone de bord est une contrainte de galetage (28),
af) dans le procédé de galetage, deux corps de galetage (16) sont pressés contre l'essieu (2),
ag) les corps de galetage (16) présentent des géométries et/ou des diamètres différents et/ou des matériaux ou des propriétés matérielles différents.

2. Procédé selon la revendication 1, **caractérisé en ce que** le procédé de renforcement de la zone de bord est réalisé dans la plage périphérique de l'essieu (2) où la valeur de la contrainte de flexion (26) due à la flexion est maximale, ou le procédé de renforcement de la zone de bord est réalisé dans la plage périphérique de l'essieu (2) où la contrainte de flexion est une contrainte de compression de flexion maximale (31) ou une contrainte de traction de flexion maximale (30).

3. Procédé selon l'une des revendications 1 ou 2, **caractérisé en ce que** les corps de galetage (16)
a) sont pressés contre l'essieu (2) avec des forces de pression différentes (20) et/ou
b) sont pressés contre l'essieu (2) pendant des durées différentes.

4. Procédé selon l'une des revendications précédentes, **caractérisé en ce que**
a) le procédé de renforcement de la zone de bord est effectué exclusivement dans une section axiale partielle (23) de l'essieu (2) et/ou
b) le procédé de renforcement de la zone de bord est réalisé avec différents paramètres dans différentes sections axiales partielles de l'essieu (2).

5. Procédé selon l'une des revendications précédentes, **caractérisé en ce que** l'essieu (2) est soumis à une autre sollicitation en plus du procédé de renforcement de la zone de bord.

6. Procédé selon l'une des revendications précédentes, **caractérisé en ce que** la flexion de l'essieu (2) est réalisée de telle sorte que la contrainte de flexion maximale de l'essieu (2) se situe dans la plage de 70 % à 100 % de la limite d'élasticité du matériau de l'essieu (2).

7. Procédé selon l'une des revendications précédentes, **caractérisé en ce que**, dans le procédé de galetage, le corps de galetage (16) exerce une pression de surface sur la surface extérieure de l'essieu (2) d'au moins 5 GPa.

8. Procédé selon l'une des revendications précédentes, **caractérisé en ce que** la pression de surface exercée par le corps de galetage (16) sur la surface extérieure de l'essieu (2) dans le procédé de galetage est de 5,0 à 15,0 fois supérieure à la limite d'élasticité du matériau de l'essieu (2).

9. Procédé selon l'une des revendications précédentes, **caractérisé en ce que**, dans le procédé de galetage, un corps de galetage (16) ayant un diamètre d est utilisé, dans lequel le rapport V d'un diamètre D de l'essieu (2) dans la zone de contact avec le corps de galetage (16) au diamètre d du corps de galetage (16) est compris entre V = 3,0 et V = 50,0.

10. Procédé selon l'une des revendications précédentes, **caractérisé en ce qu'**un dispositif (1) est utilisé pour augmenter la durabilité d'un arbre (2), avec
a) un dispositif d'entraînement (5) pour la production d'un mouvement de rotation de l'arbre (2) avec une vitesse de rotation n,
b) un dispositif de sollicitation pour solliciter l'arbre (2) avec une flexion, par rapport à l'arbre (2), tournant à la vitesse de rotation n, autour d'un axe de flexion orienté transversalement par rapport à l'axe longitudinal de l'arbre (2),
c) un dispositif de laminage (15) pour l'exécution d'un procédé de laminage sur l'arbre (2) et
d) une unité de commande (24) avec une logique de commande pour l'exécution des étapes du procédé.
